# EUROPEAN PATENT APPLICATION

(11) **EP 4 664 871 A1**
(43) Date of publication of application: **17.12.2025**
(21) Application number: 24752838.3
(22) Date of filing: 05.02.2024
(51) Int. Cl.: H04N 5/262

(54) **SPECIAL EFFECT GENERATING METHOD AND APPARATUS, COMPUTER DEVICE, AND STORAGE MEDIUM**

(30) Priority: 10.02.2023 CN 202310138821
(71) Applicant: Beijing Zitiao Network Technology Co., Ltd., Beijing 100190 (CN)
(72) Inventor: PAN, Jianxiong, Beijing 100028 (CN); SHANG, Fengyi, Beijing 100028 (CN)
(74) Representative: Isarpatent
(86) International application number: PCT/CN2024/075882
(87) International publication number: WO 2024/164983

(57) **Abstract**

The present disclosure provides a special effect generating method and apparatus, a computer device, and a storage medium. The method comprises: acquiring target dynamic content selected by a user and control action information set for the target dynamic content, wherein the control action information is used for controlling a playback state of the target dynamic content; in a special effect editing page where a first reference object is displayed, determining an association relationship between the target dynamic content and the first reference object; and generating a special effect for the target dynamic content on the basis of the association relationship, the target dynamic content and the control action information.

## Description

The present application claims priority of the Chinese Patent Application No. 2023101388210, filed on February 10, 2023, the disclosure of which is incorporated herein by reference in the present application.

### TECHNICAL FIELD

Embodiments of the present disclosure relate to an effect generation method and apparatus, a computer device and a storage medium.

### BACKGROUND

With the development of the short video technology, more and more users obtain information and share life through short videos. When a user captures a short video, the user often needs the help of an effect to beautify the video. In practical application, different effects may have different display forms, and play effects of the videos depend in a large part on selection of the effects. Accordingly, this is a serious test for the production of the effects.

### SUMMARY

Embodiments of the present disclosure at least provides an effect generation method and apparatus, a computer device and a storage medium.

In a first aspect, the embodiments of the present disclosure provide an effect generation method, which includes:
obtaining a target dynamic content selected by a user and control action information that is set for the target dynamic content, the control action information is used to control a play state of the target dynamic content;
determining an association relationship between the target dynamic content and a first reference object in an effect editing page displaying the first reference object; and
generating an effect for the target dynamic content based on the association relationship, the target dynamic content and the control action information.

In one possible implementation, obtaining the target dynamic content selected by the user includes:
receiving the target dynamic content uploaded by the user in response to a first trigger operation for a target type.

In one possible implementation, the first reference object in the effect editing page is obtained by capturing a target entity object in a physical scene in real time; or, the first reference object is a preset virtual object.

In one possible implementation, determining the association relationship between the target dynamic content and the first reference object in the effect editing page displaying the first reference object includes:
determining a target display region that is set for the target dynamic content in the effect editing page; and
determining the association relationship between the target dynamic content and the first reference object based on an association manner matching a target type to which the target dynamic content belongs and the target display region.

In one possible implementation, in response to the target type being a first type, determining the association relationship between the target dynamic content and the first reference object based on the association manner matching the target type to which the target dynamic content belongs and the target display region includes:
determining first position information of a first key point in the target dynamic content based on the target display region for the target dynamic content in the effect editing page; and determining second position information of a second key point of the first reference object in the effect editing page; and
determining the association relationship between the target dynamic content and the first reference object based on the first position information and the second position information.

In one possible implementation, determining the first position information of the first key point in the target dynamic content based on the target display region for the target dynamic content in the effect editing page includes:
creating a dynamic layer corresponding to the target dynamic content; and
determining, in the dynamic layer, the first position information of the first key point in the target dynamic content based on the target display region for the target dynamic content in the effect editing page;
determining the second position information of the second key point and/or a key region of the first reference object in the effect editing page includes:
   creating a two-dimensional key-point layer corresponding to the first reference object in the effect editing page; and
   determining the second position information of the second key point and/or the key region in the two-dimensional key-point layer.

In one possible implementation, in response to the target type being a second type, determining the association relationship between the target dynamic content and the first reference object based on the association manner matching the target type to which the target dynamic content belongs and the target display region includes:
creating a three-dimensional mesh layer corresponding to the first reference object;
determining a target mesh associated with the target dynamic content based on the target display region for the target dynamic content in the effect editing page; and
determining the association relationship between the target dynamic content and the first reference object based on the target mesh.

In one possible implementation, determining the target mesh associated with the target dynamic content based on the target display region for the target dynamic content in the effect editing page includes:
projecting a three-dimensional mesh corresponding to the first reference object onto a two-dimensional plane;
determining a target two-dimensional mesh corresponding to the target display region based on the target display region for the target dynamic content in the effect editing page and a two-dimensional mesh projected by the three-dimensional mesh on the two-dimensional plane; and
determining a three-dimensional mesh corresponding to the target two-dimensional mesh as the target mesh associated with the target dynamic content.

In one possible implementation, the method further includes:
obtaining the effect;
acquiring a video image and determining a second reference object in the video image;
displaying the target dynamic content in the effect based on position information or region information of the second reference object; and
adjusting the play state of the target dynamic content in response to detecting, in the video image, a control action matching the control action information contained in the effect.

In one possible implementation, the control action includes one or more selected from the group consisting of an appearing action, a disappearing action and a pausing action;
in response to the control action including the appearing action and the pausing action, a time of responding to the pausing action is after a time of responding to the appearing action; and
in response to the control action including the disappearing action and the pausing action, the time of responding to the pausing action is before a time of responding to the disappearing action.

In one possible implementation, in response to the control action including the pausing action, adjusting the play state of the target dynamic content in response to detecting, in the video image, a control action matching the control action information contained in the effect includes:
determining an image frame in which the target dynamic content is currently displayed in response to detecting, in the video image, the pausing action matching the control action information contained in the effect; and
stopping playing the target dynamic content and displaying the image frame at a current display position of the target dynamic content.

In a second aspect, the embodiments of the present disclosure further provide an effect generation apparatus, which includes:
an obtaining module, configured to obtain a target dynamic content selected by a user and control action information that is set for the target dynamic content, the control action information is configured to control a play state of the target dynamic content;
a determination module, configured to determine an association relationship between the target dynamic content and a first reference object in an effect editing page displaying the first reference object; and
a generation module, configured to generate an effect for the target dynamic content based on the association relationship, the target dynamic content and the control action information.

In a third aspect, the embodiments of the present disclosure further provide a computer device, which includes a processor, a memory and a bus, the memory stores machine-readable instructions executable by the processor, the processor and the memory communicate with each other through the bus when the computer device is running, and the machine-readable instructions, when executed by the processor, perform steps of the above-mentioned first aspect or any possible implementation of the first aspect.

In a fourth aspect, the embodiments of the present disclosure further provide a computer-readable storage medium, a computer program is stored on the computer-readable storage medium, and the computer program, when executed by a processor, performs steps of the above-mentioned first aspect or any possible implementation of the first aspect.

In order to make the above-mentioned objectives, features and advantages of the present disclosure more obvious and easier to understand, preferred embodiments are specifically cited below and described in detail with reference to drawings.

### BRIEF DESCRIPTION OF DRAWINGS

In order to more clearly illustrate the technical solutions of the embodiments of the present disclosure, the following is a brief introduction to the drawings required for use in the embodiments. The drawings herein are incorporated into the specification and constitute a part of the specification. These drawings illustrate embodiments consistent with the present disclosure and are used together with the specification to illustrate the technical solutions of the present disclosure. It should be understood that the following drawings only illustrate certain embodiments of the present disclosure and should not be regarded as limiting the scope. For ordinary technicians in this field, other relevant drawings can also be obtained based on these drawings without creative work.
Fig. 1 shows a flow chart of an effect generation method provided by embodiments of the present disclosure;
Fig. 2 shows a schematic diagram of an effect editing page in the effect generation method provided by the embodiment of the present disclosure;
Fig. 3 shows a flow chart of an effect display method provided by embodiments of the present disclosure;
Fig. 4 shows an architecture diagram of an effect generation apparatus provided by embodiments of the present disclosure; and
Fig. 5 shows a structure diagram of a computer device provided by embodiments of the present disclosure.

### DETAILED DESCRIPTION

In order to make objects, technical details and advantages of the embodiments of the invention apparent, the technical solutions of the embodiments are described in a clearly and fully understandable way in connection with the drawings related to the embodiments of the invention. Apparently, the described embodiments are just a part but not all of the embodiments of the invention. The components of the embodiments of the present disclosure generally described and shown in the drawings herein may be arranged and designed in a variety of different configurations. Therefore, the following detailed description of the embodiments of the present disclosure provided in the drawings is not intended to limit the scope of the present disclosure claimed, but merely represents selected embodiments of the present disclosure. Based on the described embodiments herein, those skilled in the art can obtain other embodiment(s), without any inventive work, which should be within the scope of the invention.

It should be noted that similar numbers and letters represent similar items in the following drawings, so once an item is defined in one figure, it does not need to be further defined and explained in subsequent figures.

The term "and/or" in this article only describes an association relationship, indicating that three relationships may exist. For example, A and/or B can represent: A exists alone, A and B exist at the same time, and B exists alone. In addition, the term "at least one" in this article represents any combination of at least two of any one or more of a plurality of items. For example, including at least one selected from a group consisting of A, B, and C, which can represent any one or more elements selected from the group consisting of A, B, and C.

It can be understood that before using the technical solutions disclosed in various embodiments of the present disclosure, users should be informed of the types, use scope, use scenarios, etc. of personal information involved in the present disclosure in an appropriate way according to relevant laws and regulations and be authorized by the users.

For example, in response to receiving an active request from a user, prompt information is sent to the user to clearly prompt the user that an operation requested by the user to be performed is to require acquisition and use of personal information of the user. Therefore, the user can independently choose, according to the prompt information, whether to provide personal information to software or hardware such as an electronic device, an application program, a server or a storage medium that performs the operations of the technical solution of the present disclosure.

As an optional but non-limiting implementation, in response to receiving the active request of the user, the prompt information may be sent to the user by, for example, a pop-up window, in which the prompt information can be presented in the form of text. In addition, the pop-up window can also carry a selection control for the user to choose "agree" or "disagree" to provide personal information to the electronic device.

It can be understood that the above process of notifying and acquiring user authorization is only schematic, and does not limit the implementation of the present disclosure, and other ways meeting relevant laws and regulations can also be applied to the implementation of the present disclosure.

In order to facilitate the understanding of the embodiments, an effect generation method disclosed in the embodiments of the present disclosure is introduced in detail firstly. The execution subject of the effect generation method provided in the embodiments of the present disclosure is generally a terminal device, which may for example be a smart phone, a tablet computer, a smart wearable device, etc.

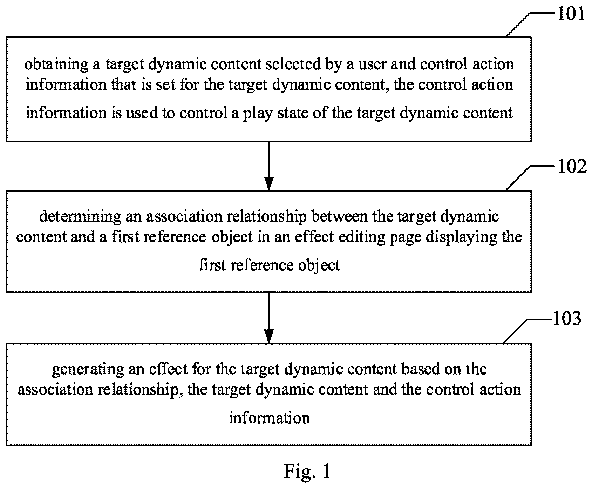

Referring to Fig. 1, which is a flow chart of an effect generation method provided by embodiments of the present disclosure. The method includes step 101 to step 103, where:
Step 101: obtaining a target dynamic content selected by a user and control action information that is set for the target dynamic content, the control action information is used to control a play state of the target dynamic content.
Step 102: determining an association relationship between the target dynamic content and a first reference object in an effect editing page displaying the first reference object.
Step 103: generating an effect for the target dynamic content based on the association relationship, the target dynamic content and the control action information.

Hereinbelow, the above steps are described in detail.

For step 101:
The target dynamic content is the dynamic content that needs to be added in the effect to be generated, i.e., the sticker content that needs to be displayed when the finally generated effect is used. The target dynamic content may for example be a dynamic image (e.g., a gif image), an animation, a video, etc.

In a possible implementation, when the target dynamic content selected by the user is obtained, the target dynamic content uploaded by the user can be received in response to a first trigger operation for a target type.

Here, the target dynamic content uploaded by the user may be the target dynamic content uploaded locally from the user, or the video content captured in real time by means of an image acquisition apparatus of the user.

For example, multiple types can be displayed in an entry page for effect editing, and display effects corresponding to different types may be different. The user can enter the effect editing page of the corresponding type by triggering different types.

Optionally, the target type may include a first type for two-dimensional display and a second sticker type for three-dimensional display. The first type of sticker can be simple image overlay in progress, and the second type of sticker can be displayed in a three-dimensional way through three-dimensional projection. The specific display implementation method is introduced below, and is not described in detail here.

In another possible implementation, when the target dynamic content selected by the user is obtained, multiple optional dynamic contents can also be set in advance. Then, in response to the user's selection operation for any dynamic content, the dynamic content corresponding to the selection operation is used as the target dynamic content selected by the user, and the target dynamic content selected by the user is obtained.

Since the sticker content added in the generated effect is a dynamic content, the control action information for the target dynamic content can also be added in order to improve the display effect of the effect. The control action information is used to control the play state of the target dynamic content, e.g., it can control the target dynamic content to be paused or control the target dynamic content to start playing.

Specifically, the control action information may be action information that needs to be detected by the user when using the effect after the effect is generated, e.g., smiling, blinking, waving, etc.

In a possible scenario, there may be multiple target dynamic contents selected by the user, and the control action information set for different target dynamic contents may be the same or different. In another possible scenario, the user can also select a static content, which can correspond to the set control action information. The control action information of the static content can be used to control display or disappearance of the static content. The control action information of the static content and the control action information of the target dynamic content may be the same or different.

In practical application, for any kind of dynamic content or static content, multiple kinds of optional control action information can be provided, and the user can set the corresponding control action information for each dynamic content or static content.

In another possible implementation, the control action information may be empty. In this case, after production of the effect for the target dynamic content is completed, the target dynamic content can be played and displayed continuously during application of the effect.

In another possible implementation, the control action information may also include random pause. The random pause includes two possible situations. In one situation, when the effect is applied, the target dynamic content is paused/played at random time, e.g., the target dynamic content can be paused after playing for N seconds, N is a random number. In the other situation, the control action for controlling the target dynamic content is random when the effect is applied, i.e., a control action is randomly determined when the effect is applied.

For step 102:
The effect editing page is a page for effect editing. In a possible implementation, the first reference object can be displayed in the effect editing page. The first reference object is obtained by capturing a target entity object in a physical scene in real time; or, the first reference object is a preset virtual object.

For example, the preset virtual object may be a two-dimensional plane virtual object or a three-dimensional virtual object, which is not limited in the present disclosure.

Here, the purpose of displaying the first reference object in the effect editing page is to facilitate real-time adjustment by the user according to the displayed target dynamic content during production of the effect, e.g., position adjustment and size adjustment.

Further, when the first virtual object is the preset virtual object, in order to display the target dynamic content more truly, the acquired video image can also be obtained, and position information of a second reference object in the video image can be determined. In this way, after the association relationship is determined based on step 102, a preview result of the finally generated effect can be displayed based on the position information of the second reference object and the association relationship.

Since different target types correspond to different display manners, the different target types can also match different association manners for display in different dimensions.

In a possible implementation, when the association relationship between the target dynamic content and the first reference object is determined in the effect editing page displaying the first reference object, a target display region that is set for the target dynamic content in the effect editing page can be determined firstly, and then the association relationship between the target dynamic content and the first reference object is determined based on an association manner matching a target type to which the target dynamic content belongs and the target display region.

The target type to which the target dynamic content belongs may be determined by the user when selecting the target dynamic content; or, in another possible implementation, the target type to which the target dynamic content belongs may be matched with the target dynamic content after the target dynamic content is identified.

For example, when the target dynamic content is identified and matched with the target type, the correspondence between the dynamic content type and each target type can be set in advance, and then the target type to which the target dynamic content belongs is determined based on the correspondence and the dynamic content type of the target dynamic content.

For example, the target type may be a sticker type, the sticker type corresponding to the dynamic image may be the first type, and the sticker type corresponding to the animation may be the second type. If the target dynamic content is an animation, the target type is the second type. If the target dynamic content is a gif image, the target type may be the first type.

Specifically, when the association relationship between the target dynamic content and the first reference object is determined, it can be divided into the following two cases based on the different target types:
Case 1: the target type is the first type used for two-dimensional display.

In this case, the association manner matching the target type to which the target dynamic content belongs is that a first key point of the target dynamic content is associated with a second key point of the first reference object.

For example, determining the association relationship between the target dynamic content and the first reference object based on the association manner matching the target type to which the target dynamic content belongs and the target display region may include the following steps:
Step a1: determining first position information of the first key point in the target dynamic content based on the target display region for the target dynamic content in the effect editing page; and determining second position information of the second key point of the first reference object in the effect editing page.
Step a2: determining the association relationship between the target dynamic content and the first reference object based on the first position information and the second position information.

The first key point in the target dynamic content may refer to a key point of the position of the target dynamic content. For example, it may refer to a center point of the target dynamic content. The first key points of different target dynamic content may be the same, which means that the first key points are of the same type, rather than that the first key points have the same first position information.

For example, when the first position information of the first key point in the target dynamic content is determined, a dynamic layer corresponding to the target dynamic content can be created firstly, and a size of the dynamic layer is the same as a size of the region of a dynamic content for displaying in the effect editing page; and then the first position information of the first key point in the target dynamic content can be determined in the dynamic layer based on the target display region for the target dynamic content in the effect editing page.

The second key point of the first reference object in the effect editing page may be set in advance. For example, if the first reference object is a face, the second key point may be a center point between the eyebrows. When different users edit the effect, the corresponding second key points may be the same.

In a possible implementation, when the second position information of the second key point of the first reference object is determined, a two-dimensional key-point layer corresponding to the first reference object in the effect editing page can be created, and then the second position information of the second key point is determined in the two-dimensional key-point layer.

In another possible implementation, when the target type is the first type, the association manner matching the target type to which the target dynamic content belongs may also be that the first key point of the target dynamic content is associated with a key region of the first reference object. The key region may refer to a reference region during the effect display, e.g., a region where a hand detection box is located, a region where an eye detection box is located, etc.

In a possible implementation, in the effect editing page, the user can select the association manner, i.e., whether the first position information of the first key point in the target dynamic content is selected to be associated with the second position information of the second key point, or the first position information of the first key point in the target dynamic content is selected to be associated with the second position information of the key region.

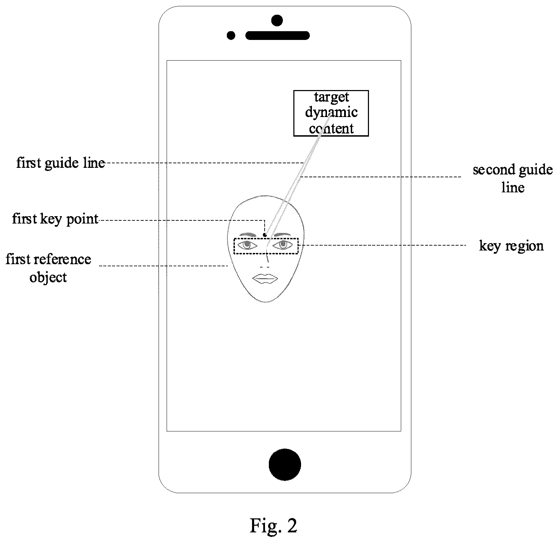

For example, after the target dynamic content is selected, association guide lines (e.g., a first guide line connecting the first key point and the second key point, and a second guide line connecting the first key point and the key region) can be displayed simultaneously in the effect editing page when the user adjusts the display position of the target dynamic content, as shown in Fig. 2. The user can select the corresponding association manner by triggering the guide line.

It should be noted that, selecting the association manner here refers to that the association manner is selected when the target type is the first type, and the association manners are essentially of the same category.

In a possible implementation, the association relationship between the target dynamic content and the first reference object can be characterized by the relative position relationship. When the association relationship between the target dynamic content and the first reference object is determined based on the first position information and the second position information, the relative position relationship between the target dynamic content and the first reference object can be determined directly based on the first position information and the second position information.

Case 2: the target type is the second type used for three-dimensional display.

In this case, the association manner matching the target type to which the target dynamic content belongs is that the target dynamic content is associated with a target part region of the first reference object.

In a possible implementation, for example, determining the association relationship between the target dynamic content and the first reference object based on the association manner matching the target type to which the target dynamic content belongs and the target display region may include the following steps:
Step b1: creating a three-dimensional mesh layer corresponding to the first reference object.
Step b2: determining a target mesh associated with the target dynamic content based on the target display region for the target dynamic content in the effect editing page.
Step b3: determining the association relationship between the target dynamic content and the first reference object based on the target mesh.

Specifically, for example, when the target mesh associated with the target dynamic content is determined based on the target display region for the target dynamic content in the effect editing page, a three-dimensional mesh corresponding to the first reference object in the three-dimensional mesh layer can be projected onto a two-dimensional plane firstly, then a target two-dimensional mesh corresponding to the target display region is determined based on the target display region for the target dynamic content in the effect editing page and a two-dimensional mesh projected by the three-dimensional mesh on the two-dimensional plane, and a three-dimensional mesh corresponding to the target two-dimensional mesh is determined as the target mesh associated with the target dynamic content.

When the association relationship between the target dynamic content and the first reference object is determined based on the target mesh, for example, the target dynamic content can be directly bound with the target mesh. The target mesh bound with the target dynamic content is the association relationship between the target dynamic content and the first reference object.

Here, since the target dynamic content is of a sticker type for three-dimensional display, through binding of the target dynamic content with the target mesh, the target dynamic content can be displayed in combination with visibility and invisibility of a part region corresponding to the target mesh. Thereby, three-dimensional display of the target dynamic content is realized.

For step 103:
In a possible implementation, when an effect for the target dynamic content is generated based on the association relationship, the target dynamic content and the control action information, for example, the association relationship, the target dynamic content and the control action information can be packaged to generate the effect for the target dynamic content.

Optionally, other related information, such as a display size of the target dynamic content, etc., can also be set in the effect editing page. Further, when the association relationship, the target dynamic content and the control action information are packaged to generate the effect for the target dynamic content, other related information such as the display size of the target dynamic content can also be packaged synchronously to generate the effect for the target dynamic content.

The effect generation method and apparatus, the computer device and the storage medium provided by the embodiments of the present disclosure provide the user with a variety of options. The user can freely select different types of target dynamic content, and freely generate the effect for controlling the target dynamic content by setting the display position of the target dynamic content and the control action information, which enriches the source of the effects and the interactive form of effect production, reduces the difficulty in effect production, and further improves the production quantity and quality of the effects.

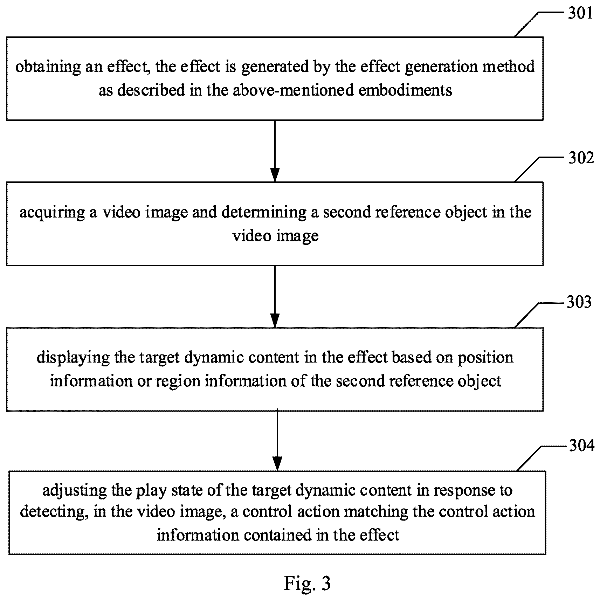

Corresponding to the effect generation method described in Fig. 1, the present disclosure also provides an effect display method. Referring to Fig. 3, which is a flow chart of an effect display method provided by the present disclosure. The effect display method includes the following steps:
Step 301: obtaining an effect, the effect is generated by the effect generation method as described in the above-mentioned embodiments.
Step 302: acquiring a video image and determining a second reference object in the video image.
Step 303: displaying the target dynamic content in the effect based on position information or region information of the second reference object.
Step 304: adjusting the play state of the target dynamic content in response to detecting, in the video image, a control action matching the control action information contained in the effect.

Specifically, when the target dynamic content in the effect is displayed based on the position information or the region information of the second reference object, the display position of the target dynamic content can be determined firstly based on the position information or the region information of the second reference object and the association relationship between the target dynamic content contained in the effect and the specified reference object, and the target dynamic content is displayed based on the determined display position.

When the target dynamic content is displayed, the target dynamic content can be displayed in different ways based on the different target types of the target dynamic content.

For example, when the target type is the above-mentioned first type, the target dynamic content can be displayed at the display position of the target dynamic content in the video image directly after the display position is determined.

When the target type is the above-mentioned second type, the position information of the target mesh associated with the target dynamic content can be determined based on the association relationship and the position information or the region information of the second reference object, and then the target dynamic content is mapped to the target mesh as a texture based on the UV mapping corresponding to the second reference object. Thereby, three-dimensional display of the target dynamic content is realized.

In a possible implementation, after the video image is acquired or after the target dynamic content is displayed, prompt information containing the control action information can be displayed to prompt the user to make a control action corresponding to the control action information and control the target dynamic content.

In a possible implementation, if the control action includes an appearing action, whether the appearing action occurs in the video image can also be detected before the target dynamic content in the effect is displayed based on the position information or the region information of the second reference object. If the appearing action occurs in the video image, then the target dynamic content is displayed.

For example, the appearing action may be blinking. After the video image is acquired, whether the second reference object in the video image makes a blinking action can be detected. If it is detected that the second reference object makes a blinking action, the target dynamic content can be displayed according to step 303 as described above.

In another possible implementation, the control action may also include a disappearing action. When the disappearing action is detected in the acquired video image, it can be cancelled to display the target dynamic content in the video image.

For example, if the disappearing action is a wave, then after the target dynamic content is displayed in the video image, whether the second reference object in the video image makes a wave action can be detected. If it is detected that the second reference object makes the wave action, it can be cancelled to display the target dynamic content in the video image.

In another possible implementation, the control action may also include a pausing action. After the pausing action is detected, the target dynamic content can be controlled to be paused to be played.

Specifically, an image frame in which the target dynamic content is currently displayed can be determined in response to detecting, in the video image, the pausing action matching the control action information contained in the effect. Then, the target dynamic content is stopped from being played, and the image frame is displayed at a current display position of the target dynamic content.

The target dynamic content can be understood as multiple continuous image frames, and playing the target dynamic content can be understood as playing the continuous image frames in order. After the pausing action is detected, the image frame in which the target dynamic content is currently displayed can be directly determined and directly displayed. After the target dynamic content is paused to be played, the displayed image frame can be understood as a static content.

In addition, the control action may also include a start action. After the target dynamic content is stopped from being played, it is also possible to continue playing the target dynamic content based on the currently displayed image frame in response to detecting, in the video image, the start action matching the control action information contained in the effect.

Alternatively, in another possible implementation, after the pausing action is detected and the target dynamic content is paused, it is possible to continue playing the target dynamic content directly based on the currently displayed image frame in case that the pause duration reaches a target duration.

The target duration may be a preset fixed duration, or a duration calculated based on the full playing duration of the target dynamic content. For example, the ratio between the target duration and the full playing duration may be a preset ratio.

For example, if the duration for completely playing the target dynamic content once is 10 seconds and the preset ratio is 1/2, then the target duration can be 5 seconds, i.e., the target dynamic content can continue to be played after it is paused for 5 seconds.

Through such automatic playing of the target dynamic content after the pause, the user can be guided to view the complete target dynamic content and attracted to trigger the pause again, thereby increasing the interaction with the user and improving the display effect of the effect.

In summary, the control action may include one or more selected from the group consisting of the appearing action, the disappearing action and the pausing action. When the control action includes the appearing action and the pausing action, a time of responding to the pausing action is after a time of responding to the appearing action. When the control action includes the disappearing action and the pausing action, the time of responding to the pausing action is before a time of responding to the disappearing action.

That is, if responding to the pausing action, it is necessary to ensure that the target dynamic content is displayed in the current video image, i.e., the appearing action has been responded to in advance, and the disappearing action has not been responded to.

It should be noted that the appearing action, the disappearing action, the pausing action, etc. described above can be set to the same action. For example, they all can be set to blinking. In this case, it is possible to detect the number of times for making the action and to make a response in the corresponding order.

For example, if the response order is the appearing action → the pausing action → the disappearing action, then the target dynamic content can be displayed when the blinking action is detected for the first time, the target dynamic content can be paused when the blinking action is detected for the second time, display of the target dynamic content can be cancelled when the blinking action is detected for the third time, and so on.

As can be understood by those skilled in the art, in the above method of the implementation, the writing order of the steps does not imply a strict execution order which constitutes any limitation on the implementation process, and the specific execution order of the steps shall be determined by their functions and possible internal logic.

Based on the same invention idea, an effect generation apparatus corresponding to the effect generation method is further provided in embodiments of the present disclosure. Since the principle of solving the problem by the apparatus in the embodiments of the present disclosure is similar to the above effect generation method in the embodiments of the present disclosure, reference can be made to the implementation of the method for the implementation of the apparatus, and their similarities are not repeated.

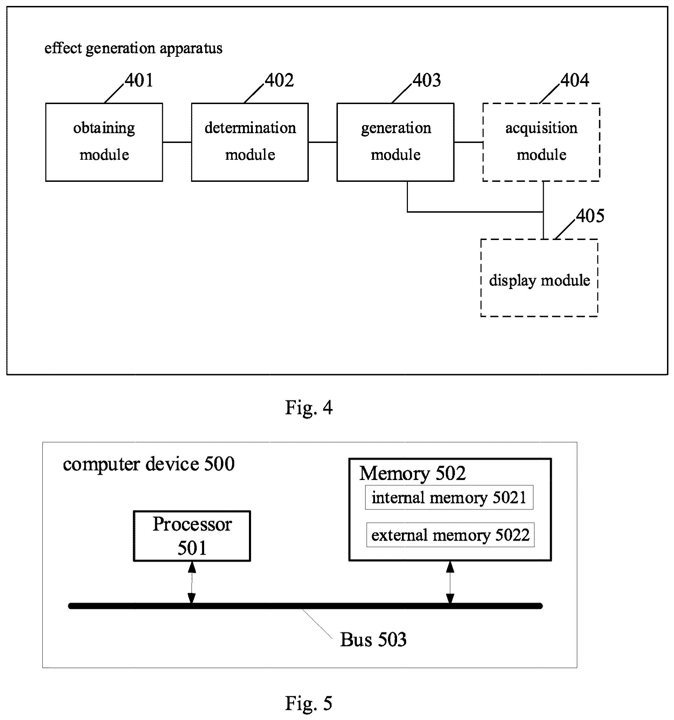

Referring to Fig. 4, which is an architecture diagram of an effect generation apparatus provided by embodiments of the present disclosure. The apparatus includes an obtaining module 401, a determination module 402, a generation module 403, an acquisition module 404 and a display module 405.

The obtaining module 401 is configured to obtain a target dynamic content selected by a user and control action information that is set for the target dynamic content, the control action information is configured to control a play state of the target dynamic content.

The determination module 402 is configured to determine an association relationship between the target dynamic content and a first reference object in an effect editing page displaying the first reference object.

The generation module 403 is configured to generate an effect for the target dynamic content based on the association relationship, the target dynamic content and the control action information.

In a possible implementation, when obtaining the target dynamic content selected by the user, the obtaining module 401 is configured to:
receive the target dynamic content uploaded by the user in response to a first trigger operation for a target type.

In a possible implementation, the first reference object in the effect editing page is obtained by capturing a target entity object in a physical scene in real time; or, the first reference object is a preset virtual object.

In a possible implementation, when determining the association relationship between the target dynamic content and the first reference object in the effect editing page displaying the first reference object, the determination module 402 is configured to:
determine a target display region that is set for the target dynamic content in the effect editing page; and
determine the association relationship between the target dynamic content and the first reference object based on an association manner matching a target type to which the target dynamic content belongs and the target display region.

In a possible implementation, if the target type is a first type, when determining the association relationship between the target dynamic content and the first reference object based on the association manner matching the target type to which the target dynamic content belongs and the target display region, the determination module 402 is configured to:
determine first position information of a first key point in the target dynamic content based on the target display region for the target dynamic content in the effect editing page; and determine second position information of a second key point of the first reference object in the effect editing page; and
determine the association relationship between the target dynamic content and the first reference object based on the first position information and the second position information.

In a possible implementation, when determining the first position information of the first key point in the target dynamic content based on the target display region for the target dynamic content in the effect editing page, the determination module 402 is configured to:
create a dynamic layer corresponding to the target dynamic content; and
determine, in the dynamic layer, the first position information of the first key point in the target dynamic content based on the target display region for the target dynamic content in the effect editing page.

When determining the second position information of the second key point and/or a key region of the first reference object in the effect editing page, the determination module 402 is configured to:
create a two-dimensional key-point layer corresponding to the first reference object in the effect editing page; and
determine the second position information of the second key point and/or the key region in the two-dimensional key-point layer.

In a possible implementation, if the target type is a second type, when determining the association relationship between the target dynamic content and the first reference object based on the association manner matching the target type to which the target dynamic content belongs and the target display region, the determination module 402 is configured to:
create a three-dimensional mesh layer corresponding to the first reference object;
determine a target mesh associated with the target dynamic content based on the target display region for the target dynamic content in the effect editing page; and
determine the association relationship between the target dynamic content and the first reference object based on the target mesh.

In a possible implementation, when determining the target mesh associated with the target dynamic content based on the target display region for the target dynamic content in the effect editing page, the determination module 402 is configured to:
project a three-dimensional mesh corresponding to the first reference object onto a two-dimensional plane;
determine a target two-dimensional mesh corresponding to the target display region based on the target display region for the target dynamic content in the effect editing page and a two-dimensional mesh projected by the three-dimensional mesh on the two-dimensional plane; and
determine a three-dimensional mesh corresponding to the target two-dimensional mesh as the target mesh associated with the target dynamic content.

In a possible implementation, the obtaining module 401 is also configured to obtain the effect.

The apparatus further includes the acquisition module 404, which is configured to acquire a video image and determine a second reference object in the video image.

The apparatus further includes the display module 405, which is configured to display the target dynamic content in the effect based on position information or region information of the second reference object.

The display module 405 is also configured to adjust the play state of the target dynamic content in response to detecting, in the video image, a control action matching the control action information contained in the effect.

In a possible implementation, the control action includes one or more selected from the group consisting of an appearing action, a disappearing action and a pausing action.

When the control action includes the appearing action and the pausing action, a time of responding to the pausing action is after a time of responding to the appearing action.

When the control action includes the disappearing action and the pausing action, the time of responding to the pausing action is before a time of responding to the disappearing action.

In a possible implementation, if the control action includes the pausing action, when adjusting the play state of the target dynamic content in response to detecting, in the video image, the control action matching the control action information contained in the effect, the display module is configured to:
determine an image frame in which the target dynamic content is currently displayed in response to detecting, in the video image, the pausing action matching the control action information contained in the effect; and
stop playing the target dynamic content and display the image frame at a current display position of the target dynamic content.

For the description of the processing flow of each module and the interaction flow between the modules in the apparatus, reference can be made to the relevant description in the above embodiments of the method, which is not detailed here.

Based on the same technical idea, a computer device is further provided in embodiments of the present disclosure. Referring to Fig. 5, which is a structure diagram of a computer device 500 provided by the embodiment of the present disclosure. The computer device includes a processor 501, a memory 502 and a bus 503. The memory 502 is configured to store execution instructions, and includes an internal memory 5021 and an external memory 5022. Here, the internal memory 5021, also known as the internal storage, is configured to temporarily store operational data in the processor 501 and data exchanged with the external memory 5022 such as the hard disk, etc. The processor 501 exchanges data with the external memory 5022 through the internal memory 5021. When the computer device 500 is running, the processor 501 and the memory 502 communicate with each other through the bus 503 so that the processor 501 executes the following instructions:
obtaining a target dynamic content selected by a user and control action information that is set for the target dynamic content, the control action information is used to control a play state of the target dynamic content;
determining an association relationship between the target dynamic content and a first reference object in an effect editing page displaying the first reference object; and
generating an effect for the target dynamic content based on the association relationship, the target dynamic content and the control action information.

In a possible implementation, in the instructions executed by the processor 501, obtaining the target dynamic content selected by the user includes:
receiving the target dynamic content uploaded by the user in response to a first trigger operation for a target type.

In a possible implementation, in the instructions executed by the processor 501, the first reference object in the effect editing page is obtained by capturing a target entity object in a physical scene in real time; or, the first reference object is a preset virtual object.

In a possible implementation, in the instructions executed by the processor 501, determining the association relationship between the target dynamic content and the first reference object in the effect editing page displaying the first reference object includes:
determining a target display region that is set for the target dynamic content in the effect editing page; and
determining the association relationship between the target dynamic content and the first reference object based on an association manner matching a target type to which the target dynamic content belongs and the target display region.

In a possible implementation, in the instructions executed by the processor 501, when the target type is a first type, determining the association relationship between the target dynamic content and the first reference object based on the association manner matching the target type to which the target dynamic content belongs and the target display region includes:
determining first position information of a first key point in the target dynamic content based on the target display region for the target dynamic content in the effect editing page; and determining second position information of a second key point of the first reference object in the effect editing page; and
determining the association relationship between the target dynamic content and the first reference object based on the first position information and the second position information.

In a possible implementation, in the instructions executed by the processor 501, determining the first position information of the first key point in the target dynamic content based on the target display region for the target dynamic content in the effect editing page includes:
creating a dynamic layer corresponding to the target dynamic content; and
determining, in the dynamic layer, the first position information of the first key point in the target dynamic content based on the target display region for the target dynamic content in the effect editing page.

Determining the second position information of the second key point and/or a key region of the first reference object in the effect editing page includes:
creating a two-dimensional key-point layer corresponding to the first reference object in the effect editing page; and
determining the second position information of the second key point and/or the key region in the two-dimensional key-point layer.

In a possible implementation, in the instructions executed by the processor 501, when the target type is a second type, determining the association relationship between the target dynamic content and the first reference object based on the association manner matching the target type to which the target dynamic content belongs and the target display region includes:
creating a three-dimensional mesh layer corresponding to the first reference object;
determining a target mesh associated with the target dynamic content based on the target display region for the target dynamic content in the effect editing page; and
determining the association relationship between the target dynamic content and the first reference object based on the target mesh.

In a possible implementation, in the instructions executed by the processor 501, determining the target mesh associated with the target dynamic content based on the target display region for the target dynamic content in the effect editing page includes:
projecting a three-dimensional mesh corresponding to the first reference object onto a two-dimensional plane;
determining a target two-dimensional mesh corresponding to the target display region based on the target display region for the target dynamic content in the effect editing page and a two-dimensional mesh projected by the three-dimensional mesh on the two-dimensional plane; and
determining a three-dimensional mesh corresponding to the target two-dimensional mesh as the target mesh associated with the target dynamic content.

In a possible implementation, the instructions executed by the processor 501 further include:
obtaining the effect;
acquiring a video image and determining a second reference object in the video image;
displaying the target dynamic content in the effect based on position information or region information of the second reference object; and
adjusting the play state of the target dynamic content in response to detecting, in the video image, a control action matching the control action information contained in the effect.

In a possible implementation, in the instructions executed by the processor 501, the control action includes one or more selected from the group consisting of an appearing action, a disappearing action and a pausing action.

When the control action includes the appearing action and the pausing action, a time of responding to the pausing action is after a time of responding to the appearing action.

When the control action includes the disappearing action and the pausing action, the time of responding to the pausing action is before a time of responding to the disappearing action.

In a possible implementation, in the instructions executed by the processor 501, when the control action includes the pausing action, adjusting the play state of the target dynamic content in response to detecting, in the video image, the control action matching the control action information contained in the effect includes:
determining an image frame in which the target dynamic content is currently displayed in response to detecting, in the video image, the pausing action matching the control action information contained in the effect; and
stopping playing the target dynamic content and displaying the image frame at a current display position of the target dynamic content.

A computer-readable storage medium is further provided in embodiments of the present disclosure. A computer program is stored on the computer-readable storage medium, and the computer program, when executed by a processor, to performs the steps of the effect generation method as described in the above embodiments of the method. The storage medium may be a volatile or non-volatile computer-readable storage medium.

A computer program product is further provided in embodiments of the present disclosure. The computer program product carries program codes, which include instructions for executing the steps of the effect generation method as described in the above embodiments of the method. Reference can be made to the above embodiments of the method, which is not repeated here.

The computer program product can be specifically realized through hardware, software or a combination thereof. In an optional embodiment, the computer program product is specifically embodied as a computer storage medium. In another optional embodiment, the computer program product is specifically embodied as a software product, e.g., a Software Development Kit (SDK), etc.

As can be clearly appreciated by those skilled in the art, for convenience and simplicity of description, reference can be made to the corresponding process in the above embodiments of the method for the specific working process of the system and apparatus as described above, which is not repeated here. In the several embodiments provided by the present disclosure, it should be understood that the disclosed system, apparatus and method can be implemented in other ways. The embodiments of the apparatus described above are only illustrative. As an example, the division of the units or modules is only a logical function division, and there may be some other division in the actual implementation. As another example, multiple units or components can be combined or integrated into another system, or some features can be omitted or not be performed. In addition, the coupling or direct coupling or communication connection between each other shown or discussed may be indirect coupling or communication connection through some communication interfaces, apparatuses or units, and may be in the electrical, mechanical or some other form.

The units or modules described as separate parts may or may not be physically separate, and the parts shown as units may or may not be physical units, i.e., may be located in one place or may also be distributed to multiple network units. Some or all of the units can be selected according to the actual needs to realize the purpose of the embodiments.

In addition, the functional units or modules in the embodiments of the present disclosure may be integrated into one processing unit, the units may exist physically separately, or two or more of the units may be integrated into one unit.

If the function is implemented in the form of a software functional unit and sold or used as an independent product, it can be stored in a processor-executable, non-volatile, computer-readable storage medium. Based on this understanding, the technical solution of the present disclosure in essence or the part that contributes to the prior art or part of the technical solution can be embodied in the form of a software product. The computer software product is stored in a storage medium, and includes a number of instructions for causing a computer device (which may be a personal computer, a server, a network device etc.) to perform all or part of the steps of the method described in the embodiments of the present disclosure. The aforementioned storage medium includes various media that can store program codes such as a U disk, a mobile hard disk, a Read-Only Memory (ROM), a Random Access Memory (RAM), a diskette or a compact disk.

Finally, it should be noted that the above embodiments are only specific implementations of the present disclosure, which are used to illustrate the technical solution of the present disclosure but are not intended to limit it, and the scope of protection of the present disclosure is not limited to this. Although the present disclosure has been described in detail by reference to the aforesaid embodiments, those of ordinary skill in the art should understand that: within the technical scope disclosed in the present disclosure, any technical person familiar with the art can still modify or easily think of changes to the technical solution recorded in the aforesaid embodiments or replace some of the technical features equivalently; and these modifications, changes or replacements do not make the essence of the corresponding technical solution depart from the spirit and scope of the technical solution of the embodiments of the present disclosure, and are all covered within the scope of protection of the present disclosure. Therefore, the scope of protection of the present disclosure should be governed by the scope of protection of the claims.

## Claims

1. An effect generation method, comprising:
obtaining a target dynamic content selected by a user and control action information that is set for the target dynamic content, wherein the control action information is used to control a play state of the target dynamic content;
determining an association relationship between the target dynamic content and a first reference object in an effect editing page displaying the first reference object; and
generating an effect for the target dynamic content based on the association relationship, the target dynamic content and the control action information.

2. The method according to claim 1, wherein obtaining the target dynamic content selected by the user comprises:
receiving the target dynamic content uploaded by the user in response to a first trigger operation for a target type.

3. The method according to claim 1, wherein the first reference object in the effect editing page is obtained by capturing a target entity object in a physical scene in real time; or, the first reference object is a preset virtual object.

4. The method according to claim 1, wherein determining the association relationship between the target dynamic content and the first reference object in the effect editing page displaying the first reference object comprises:
determining a target display region that is set for the target dynamic content in the effect editing page; and
determining the association relationship between the target dynamic content and the first reference object based on an association manner matching a target type to which the target dynamic content belongs and the target display region.

5. The method according to claim 4, wherein in response to the target type being a first type, determining the association relationship between the target dynamic content and the first reference object based on the association manner matching the target type to which the target dynamic content belongs and the target display region comprises:
determining first position information of a first key point in the target dynamic content based on the target display region for the target dynamic content in the effect editing page; and determining second position information of a second key point of the first reference object in the effect editing page; and
determining the association relationship between the target dynamic content and the first reference object based on the first position information and the second position information.

6. The method according to claim 5, wherein determining the first position information of the first key point in the target dynamic content based on the target display region for the target dynamic content in the effect editing page comprises:
creating a dynamic layer corresponding to the target dynamic content; and
determining, in the dynamic layer, the first position information of the first key point in the target dynamic content based on the target display region for the target dynamic content in the effect editing page;
determining the second position information of the second key point and/or a key region of the first reference object in the effect editing page comprises:
creating a two-dimensional key-point layer corresponding to the first reference object in the effect editing page; and
determining the second position information of the second key point and/or the key region in the two-dimensional key-point layer.

7. The method according to claim 4, wherein in response to the target type being a second type, determining the association relationship between the target dynamic content and the first reference object based on the association manner matching the target type to which the target dynamic content belongs and the target display region comprises:
creating a three-dimensional mesh layer corresponding to the first reference object;
determining a target mesh associated with the target dynamic content based on the target display region for the target dynamic content in the effect editing page; and
determining the association relationship between the target dynamic content and the first reference object based on the target mesh.

8. The method according to claim 7, wherein determining the target mesh associated with the target dynamic content based on the target display region for the target dynamic content in the effect editing page comprises:
projecting a three-dimensional mesh corresponding to the first reference object onto a two-dimensional plane;
determining a target two-dimensional mesh corresponding to the target display region based on the target display region for the target dynamic content in the effect editing page and a two-dimensional mesh projected by the three-dimensional mesh on the two-dimensional plane; and
determining a three-dimensional mesh corresponding to the target two-dimensional mesh as the target mesh associated with the target dynamic content.

9. The method according to claim 1, further comprising:
obtaining the effect;
acquiring a video image and determining a second reference object in the video image;
displaying the target dynamic content in the effect based on position information or region information of the second reference object; and
adjusting the play state of the target dynamic content in response to detecting, in the video image, a control action matching the control action information contained in the effect.

10. The method according to claim 9, wherein the control action comprises one or more selected from the group consisting of an appearing action, a disappearing action and a pausing action;
in response to the control action comprising the appearing action and the pausing action, a time of responding to the pausing action is after a time of responding to the appearing action; and
in response to the control action comprising the disappearing action and the pausing action, the time of responding to the pausing action is before a time of responding to the disappearing action.

11. The method according to claim 9, wherein in response to the control action comprising the pausing action, adjusting the play state of the target dynamic content in response to detecting, in the video image, the control action matching the control action information contained in the effect comprises:
determining an image frame in which the target dynamic content is currently displayed in response to detecting, in the video image, the pausing action matching the control action information contained in the effect; and
stopping playing the target dynamic content and displaying the image frame at a current display position of the target dynamic content.

12. An effect generation apparatus, comprising:
an obtaining module, configured to obtain a target dynamic content selected by a user and control action information that is set for the target dynamic content, wherein the control action information is configured to control a play state of the target dynamic content;
a determination module, configured to determine an association relationship between the target dynamic content and a first reference object in an effect editing page displaying the first reference object; and
a generation module, configured to generate an effect for the target dynamic content based on the association relationship, the target dynamic content and the control action information.

13. A computer device, comprising a processor, a memory and a bus, wherein the memory stores machine-readable instructions executable by the processor, the processor and the memory communicate with each other through the bus when the computer device is running, and the machine-readable instructions, when executed by the processor, perform steps of the effect generation method according to any of claims 1 to 11.

14. A computer-readable storage medium, wherein a computer program is stored on the computer-readable storage medium, and the computer program, when executed by a processor, performs steps of the effect generation method according to any of claims 1 to 11.
